# EUROPEAN PATENT APPLICATION

(11) **EP 2 955 014 A1**
(43) Date of publication of application: **16.12.2015**
(21) Application number: 15170979.7
(22) Date of filing: 08.06.2015
(51) Int. Cl.: B32B 5/28, B32B 3/30

(54) **METHOD OF MANUFACTURING RESIN MOLDED BODY, AND PRESS DIE FOR RESIN MOLDING**

(30) Priority: 10.06.2014 JP 2014119800
(71) Applicant: Toyota Jidosha Kabushiki Kaisha, Toyota-shi, Aichi-ken 471-8571 (JP)
(72) Inventor: IWANO, Yoshihiro, TOYOTA-SHI, AICHI-KEN, 471-8571 (JP)
(74) Representative: Intès, Didier Gérard André

(57) **Abstract**

A method of manufacturing a resin molded body (30) includes: a first step of heating a fiber reinforced resin material in which a thermoplastic resin is used as a fiber binder resin, and placing the fiber reinforced resin material between an upper die (first die) (11) and a lower die (second die) (12) that respectively have cavity surfaces (16) at which plural surface convex portions (18) are provided; and a second step of superposing the upper die (first die) (11) and the lower die (second die) (12) on each other in a molding direction, and press molding the fiber reinforced resin material at the cavity surfaces (16).

## Description

### BACKGROUND

### Field of Invention

The present invention relates to a method of manufacturing a resin molded body, and to a press die for resin molding.

### Description of the Related Art

Japanese Patent Application Laid-Open (JP-A) No. 2013-67051 discloses a technique of press molding, in a metal mold, a sheet material in which a continuous fiber reinforced thermoplastic resin layer and a discontinuous fiber reinforced thermoplastic resin layer are layered together. This technique focuses on the point that the fluidity of the discontinuous fiber reinforced thermoplastic resin layer is high and the fluidity of the continuous fiber reinforced thermoplastic resin layer is low, and the object of this technique is to make it such that, at the time of molding the sheet material in a metal mold, the metal mold can be opened without any problems, and the generation of burrs also can be suppressed.

### SUMMARY OF THE INVENTION

By the way, making the cavity surfaces of a metal mold be mirror surfaces (improving the surface roughness thereof) is generally carried out as a countermeasure to mold-release defects. If the cavity surfaces are made into mirror surfaces, the fluidity of the resin improves, but it becomes easy for fibers to adhere to the cavity surfaces, and the flow resistance increases. Due thereto, when resin-rich portions where there is much resin and few fibers, or portions where there are many fibers and little resin, arise in the resin molded body, deterioration in the bending strength of the resin molded body becomes a concern. Further, if the fibers are wavy, the bending strength of the resin molded body decreases greatly in a certain bending direction. Namely, the bending strength having directionality is of concern. The fluidity of the fibers and the resin at portions of contact between the cavity surfaces and the sheet material is not particularly considered in the aforementioned prior art example.

An object of the present invention is to improve the fluidity of fibers and resin at cavity surfaces at the time of press molding, and to ensure the strength of a resin molded body.

A method of manufacturing a resin molded body relating to a first aspect includes: a first step of heating a fiber reinforced resin material in which a thermoplastic resin is used as a fiber binder resin, and placing the fiber reinforced resin material between a first die and a second die that respectively have cavity surfaces at which plural surface convex portions are provided; and a second step of superposing the first die and the second die on each other in a molding direction, and press molding the fiber reinforced resin material at the cavity surfaces.

In this method of manufacturing a resin molded body, the fiber reinforced resin material is press molded at the cavity surfaces at which the plural surface convex portions are provided. Therefore, as compared with a case in which the cavity surfaces are mirror surfaces, the surface area of the cavity surfaces that contact the fiber reinforced resin material decreases, and it becomes difficult for fibers to adhere to the cavity surfaces. Therefore, the fluidity of the fibers and the resin at the cavity surfaces at the time of press molding is improved, and the strength of the resin molded body can be ensured.

In a second aspect, in the method of manufacturing a resin molded body relating to the first aspect, plural surface convex portions are provided at surfaces of the fiber reinforced resin material.

In this method of manufacturing a resin molded body, by providing plural surface convex portions also at the fiber reinforced resin material, the surface area of contact between the cavity surfaces and the fiber reinforced resin material is reduced further. Therefore, the fluidity of the fibers and the resin at the cavity surfaces at the time of press molding can be improved more.

In a third aspect, in the method of manufacturing a resin molded body relating to the first aspect or the second aspect, the surface convex portions are formed along a direction of flow of the thermoplastic resin and the fibers at a time of press molding.

In this method of manufacturing a resin molded body, the direction of the surface convex portions runs along the direction of flow of the thermoplastic resin and the fibers at the time of press molding. Therefore, the fluidity of the thermoplastic resin and the fibers at the time of press molding can be improved even more.

In a fourth aspect, in the method of manufacturing a resin molded body relating to any one of the first through third aspects, a height of the surface convex portions is 0.05 to 1 mm.

In this method of manufacturing a resin molded body, because the height of the surface convex portions is set appropriately, effects on the surface shape of the resin molded body can be suppressed.

In a press die for resin molding relating to a fifth aspect, plural surface convex portions are provided at cavity surfaces.

In this press die for resin molding, the plural surface convex portions are provided at the cavity surfaces. Therefore, at the time of heating and press molding the fiber reinforced resin material, in which a thermoplastic resin is used as the fiber binder resin, the surface area of the cavity surfaces that contact the fiber reinforced resin material decreases, and it becomes difficult for fibers to adhere to the cavity surfaces. Therefore, the fluidity of the fibers and the resin at the cavity surfaces at the time of press molding is improved, and the strength of the resin molded body can be ensured.

In a sixth aspect, in the press die for resin molding relating to the fifth aspect, the surface convex portions are formed along a direction of flow of a thermoplastic resin and fibers at a time of heating and press molding a fiber reinforced resin material in which the thermoplastic resin is used as a fiber binder resin.

In this press die for resin molding, the direction of the surface convex portions runs along the direction of flow of the thermoplastic resin and the fibers at the time of press molding. Therefore, the fluidity of the thermoplastic resin and the fibers at the time of press molding can be improved even more.

In a seventh aspect, in the press die for resin molding relating to the fifth aspect or the sixth aspect, a height of the surface convex portions is 0.05 to 1 mm.

In this press die for resin molding, because the height of the surface convex portions is set appropriately, effects on the surface shape of the resin molded body can be suppressed.

As described above, in accordance with the method of manufacturing a resin molded body relating to the first aspect, the excellent effects are obtained that the fluidity of the fibers and the resin at the cavity surfaces at the time of press molding can be improved, and the strength of the resin molded body can be ensured.

In accordance with the method of manufacturing a resin molded body relating to the second aspect, the excellent effect is obtained that the fluidity of the fibers and the resin at the cavity surfaces at the time of press molding can be improved more.

In accordance with the method of manufacturing a resin molded body relating to the third aspect, the excellent effect is obtained that the fluidity of the thermoplastic resin and the fibers at the time of press molding can be improved even more.

In accordance with the method of manufacturing a resin molded body relating to the fourth aspect, the excellent effect is obtained that effects on the surface shape of the resin molded body can be suppressed.

In accordance with the press die for resin molding relating to the fifth aspect, the excellent effects are obtained that the fluidity of the fibers and the resin at the cavity surfaces at the time of press molding can be improved, and the strength of the resin molded body can be ensured.

In accordance with the press die for resin molding relating to the sixth aspect, the excellent effect is obtained that the fluidity of the thermoplastic resin and the fibers at the time of press molding can be improved even more.

In accordance with the press die for resin molding relating to the seventh aspect, the excellent effect is obtained that effects on the surface shape of the resin molded body can be suppressed.

### BRIEF DESCRIPTION OF DRAWINGS

Fig. 1 is a perspective view showing a press die for resin molding relating to the present embodiment.
Fig. 2 is an enlarged sectional view showing surface convex portions that are provided at a cavity surface.
Fig. 3 is a cross-sectional view showing a state in which a fiber reinforced resin material has been placed.
Fig. 4 is an enlarged sectional view showing the surface convex portions that are provided at the cavity surfaces, and the fiber reinforced resin material.
Fig. 5 is an enlarged sectional view showing an example in which surface convex portions are provided at surfaces of the fiber reinforced resin material.
Fig. 6 is an enlarged cross-sectional perspective view showing flowing of a thermoplastic resin and fibers at a time of press molding.
Fig. 7 is a perspective view showing a resin molded body.
Fig. 8 is an enlarged perspective view showing grooves that are formed in surfaces of the resin molded body.
Fig. 9 is a graph that compares target, Comparative Example, and Example bending strengths.
Fig. 10 is a graph that compares target, Comparative Example, and Example bending strengths in a vertical direction and a lateral direction.

### DETAILED DESCRIPTION OF THE INVENTION

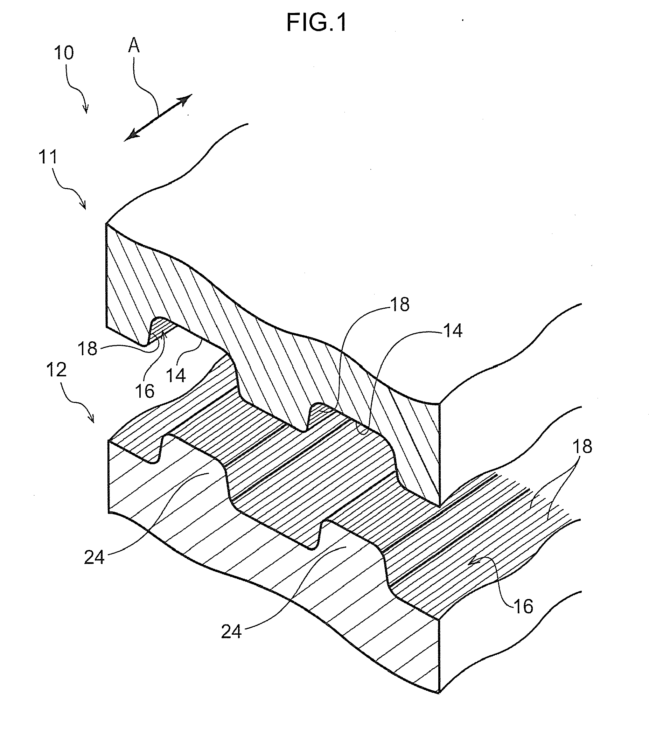

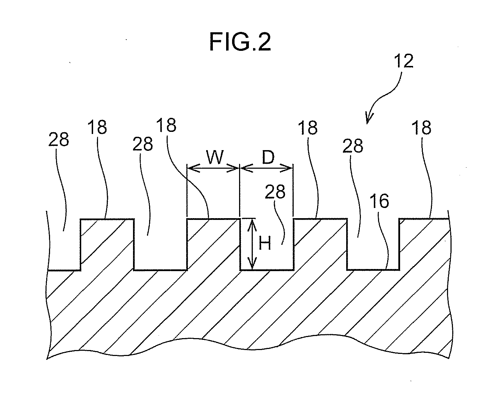

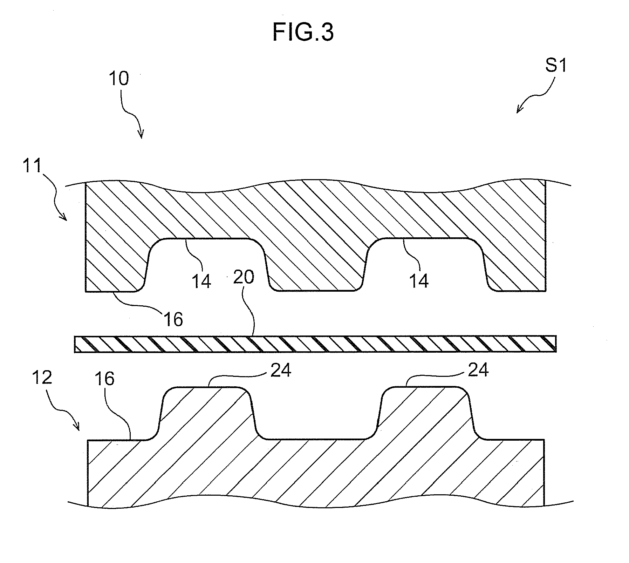

An embodiment of the present invention is described hereinafter on the basis of the drawings. In Fig. 1 and Fig. 2, a press die 10 for resin molding relating to the present embodiment has an upper die 11 that is an example of a first die, and a lower die 12 that is an example of a second die. This press die 10 for resin molding is used for deep drawing, by stamping molding, a fiber reinforced resin material 20 (see Fig. 3) in which a thermoplastic resin (not shown) is used as a fiber binder resin (not shown). The fiber reinforced resin material 20 is, for example, a carbon fiber reinforced resin (CFRP).

As an example, concave portions 14 for deep drawing are provided at the upper die 11, and convex portions 24 for deep drawing, that correspond to these concave portions 14, are provided at the lower die 12. These concave portions 14 and convex portions 24 extend rectilinearly in the arrow A direction for example. Cavities (not shown) are structured when the upper die 11 and the lower die 12 are superposed together. The die surfaces that structure the cavities are cavity surfaces 16.

Plural surface convex portions 18 are provided at, for example, the entire surfaces of the cavity surfaces 16. The surface convex portions 18 extend continuously for example along the direction of flow of the thermoplastic resin and the fibers at the time of heating and press molding the fiber reinforced resin material 20 (from Fig. 3 to Fig. 6). Namely, the surface convex portions 18 are projections. This direction of flow is the same as the direction in which the concave portions 14 of the upper die 11 and the convex portions 24 of the lower die 12 extend (the arrow A direction). The surface convex portions 18 exist as the surface shapes of the cavity surfaces 16 including the concave portions 14 and the convex portions 24, and differ from the shape for molding by deep drawing such as the concave portions 14 and the convex portions 24.

Concretely, in Fig. 2, the cross-sectional shape of the surface convex portions 18 is substantially square. Height H and width W of the surface convex portion 18 are equal, and respectively are 0.05 to 1 mm for example. Interval D between the surface convex portions 18 that are adjacent to one another also is 0.05 to 1 mm for example. The height of the surface convex portion 18 is the height in the direction normal to the cavity surface 16 that is in the vicinity of the surface convex portion 18. Grooves 28 are formed by the surface convex portions 18 that are adjacent to one another. Although Fig. 2 illustrates the surface convex portions 18 at the lower die 12, the same holds for the surface convex portions 18 at the upper die 11 as well. Note that the cross-sectional shapes of the surface convex portions 18 are not limited to square, and may be another polygonal shape, or circular arc shaped, or the like.

### (Operation)

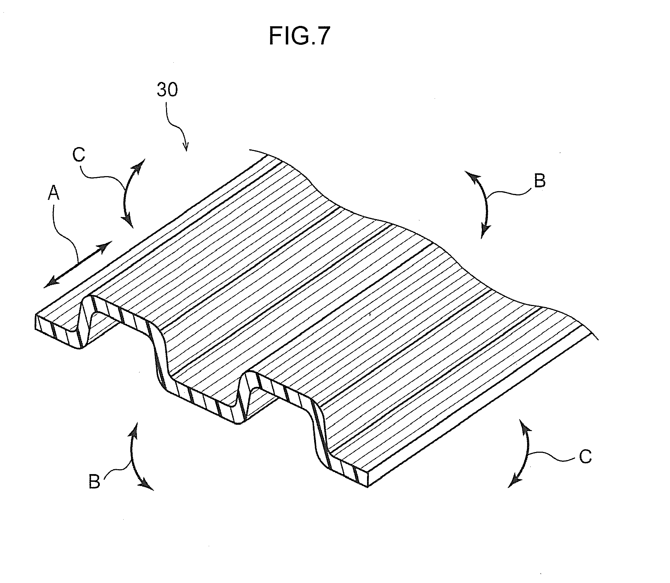

The present embodiment is structured as described above, and the operation thereof is described hereafter. In Fig. 3 through Fig. 6, when the press die 10 for resin molding relating to the present embodiment is used, a resin molded body 30 (Fig. 7) is manufactured by stamping molding by the following method of manufacturing a resin molded body.

### [Method of Manufacturing Resin Molded Body]

In Fig. 3 through Fig. 6, the method of manufacturing a resin molded body relating to the present embodiment has a first step S1 and a second step S2.

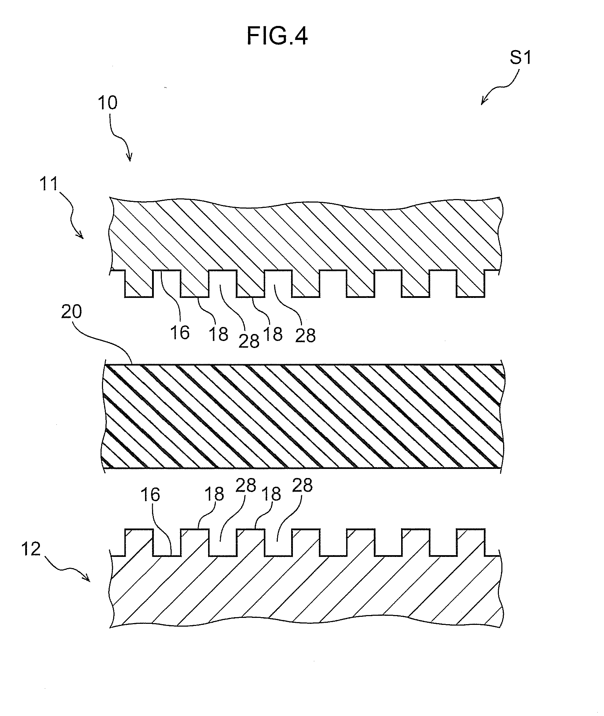

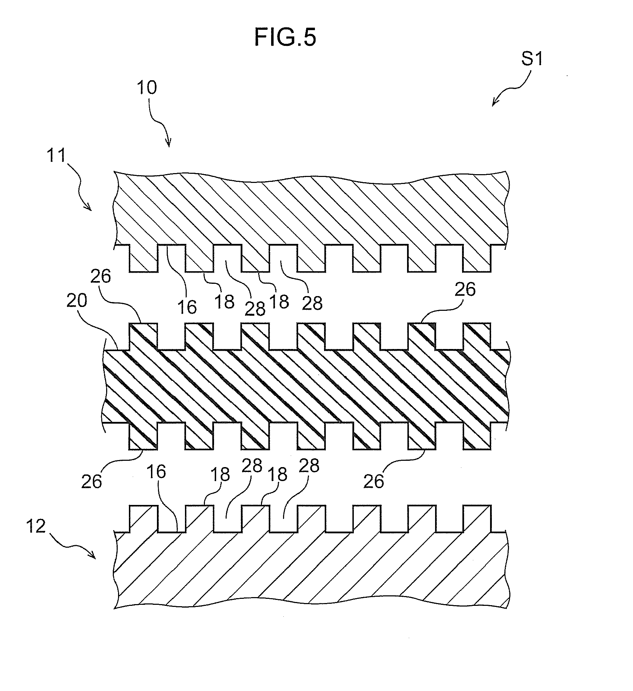

In Fig. 3 and Fig. 4, in the first step S1, the fiber reinforced resin material 20, in which a thermoplastic resin is used as the fiber binder resin, is heated, and the fiber reinforced resin material 20 is placed between the upper die 11 and the lower die 12 that respectively have the cavity surfaces 16. As shown in Fig. 5, plural surface convex portions 26 may be provided at surfaces of the fiber reinforced resin material 20 that is to be heated. These surface convex portions 26 have shapes that are similar to those of the surface convex portions 18.

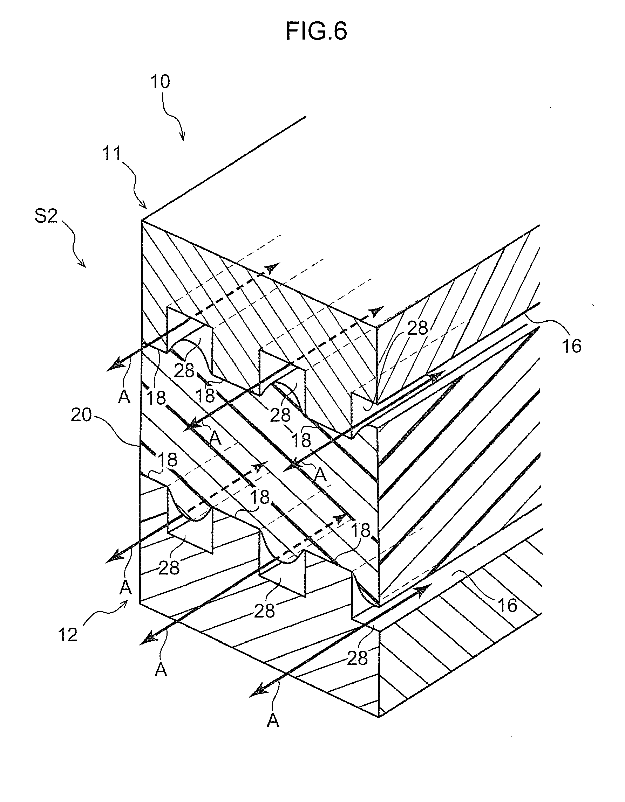

In Fig. 6, in the second step S2, the upper die 11 and the lower die 12 are superposed in the molding direction, and the fiber reinforced resin material 20 is press molded at the cavity surfaces 16 at which the plural surface convex portions 18 are provided. Because the plural surface convex portions 18 are provided at the cavity surfaces 16, the surface areas of the cavity surfaces 16 that contact the fiber reinforced resin material 20 are smaller than a case in which the cavity surfaces 16 are mirror surfaces.

Concretely, in the initial stage in which the surface convex portions 18 contact the surfaces of the fiber reinforced resin material 20, the fiber reinforced resin material 20 is in a state of spanning the grooves 28 that are between the surface convex portions 18, and does not contact the inner surfaces of the grooves 28. When molding progresses, the thermoplastic resin of the fiber reinforced resin material 20 softens due to heating, and therefore, the surface convex portions 18 slightly bite-into the surfaces of the fiber reinforced resin material 20. However, there is a slight delay until the grooves 28 are filled with the fiber reinforced resin material 20. By setting the extent of softening the thermoplastic resin, and the shape and the dimensions of the grooves 28, it can be made such that the grooves 28 are not filled with the fiber reinforced resin material 20 until the end of molding.

Due thereto, it is difficult for fibers to adhere to the cavity surfaces 16, and therefore, the fluidity of the thermoplastic resin and the fibers can be improved. The fluidity of the thermoplastic resin and the fibers improves particularly in the state in which the fiber reinforced resin material 20 does not contact the inner surfaces of the grooves 28. Further, because the direction of the surface convex portions 18 runs along the direction of flow (the arrow A direction) of the thermoplastic resin and the fibers at the time of press molding, the fluidity of the thermoplastic resin and the fibers can be improved more.

As shown in Fig. 5, when the plural surface convex portions 26 are provided also at the fiber reinforced resin material 20, the surface area of contact between the cavity surfaces 16 and the fiber reinforced resin material 20 becomes even smaller. Therefore, the fluidity of the fibers and the resin at the cavity surfaces 16 at the time of press molding can be improved even more.

In this way, in accordance with the present embodiment, the fluidity of the fibers and the resin at the cavity surfaces 16 at the time of press molding is improved, and the strength of the resin molded body 30 can be ensured. Further, due to the fluidity of the fibers and the resin improving, the applied pressure that is needed for press molding is reduced. Therefore, even if an existing press machine is a machine having relatively low applied pressure, that press machine can be utilized. Accordingly, investment in equipment can be suppressed.

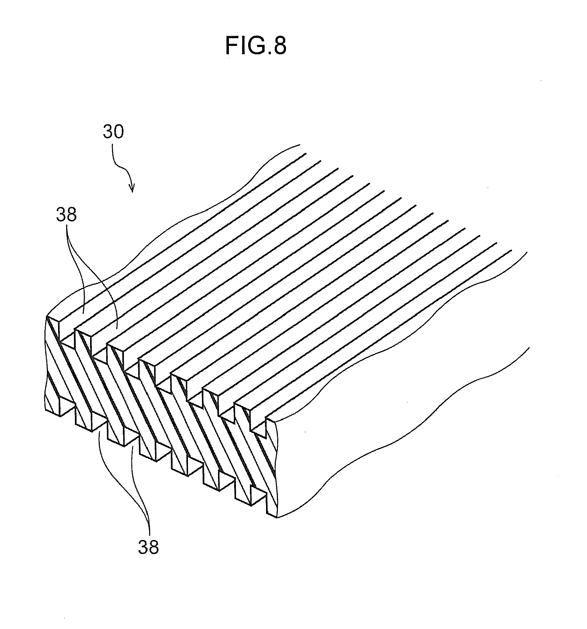

Moreover, by setting the height of the surface convex portions 18 appropriately, effects on the shape of the surfaces of the resin molded body 30 can be reduced. Due to the thermoplastic resin being cooled and hardened in the state in which the surface convex portions 18 bite-into the surfaces of the fiber reinforced resin material 20 at the time of molding, plural grooves 38 are formed in the surfaces of the resin molded body 30 as shown in Fig. 7 and Fig. 8. The height H of the surface convex portions 18 of the upper die 11 and the lower die 12 (Fig. 1) is 0.05 to 1 mm (Fig. 2), and the depth of the grooves 38 is equal thereto. Note that, in Fig. 8, the size of the grooves 38 is illustrated in an exaggerated manner.

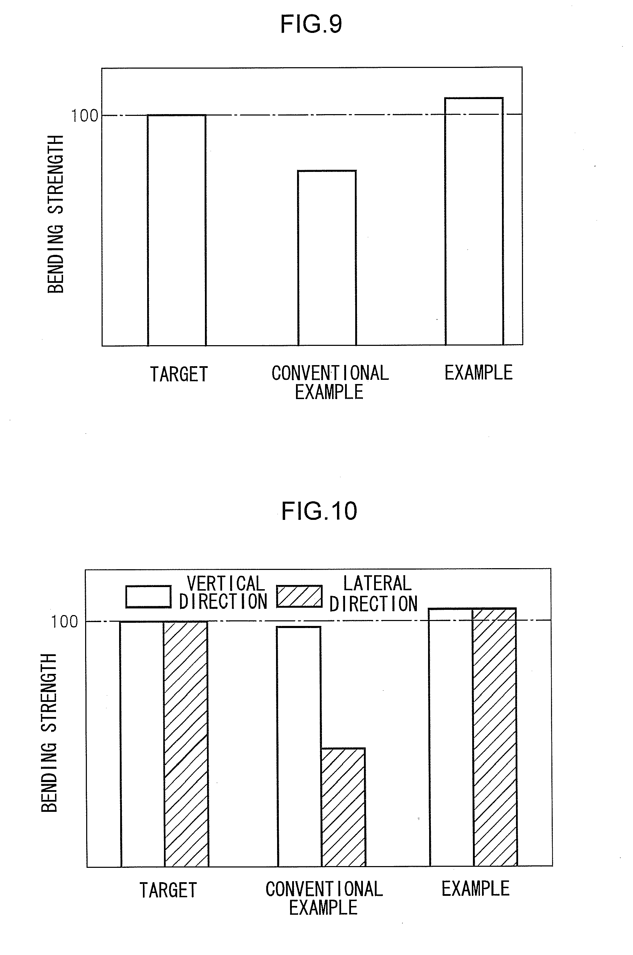

Fig. 9 is a graph that compares a target, a Conventional Example and an Example, with respect to bending strengths of resin molded bodies. An index whose target value is 100 is plotted on the vertical axis, and greater numerical values indicate better results. The Conventional Example is bending strength of a region that is structured almost only of carbon fibers, and is only approximately 77% of the target. The Example is bending strength relating to the resin molded body 30 that has been molded by the present embodiment, and achieves approximately 107% of the target.

Fig. 10 is a graph that compares a target, a Conventional Example and an Example, with respect to bending strengths of resin molded bodies in the vertical direction and the lateral direction. The vertical axis is the same as in Fig. 9. Bending strength in the vertical direction is strength with respect to bending in the arrow B direction in Fig. 7. Bending strength in the lateral direction is strength with respect to bending in the arrow C direction in Fig. 7. The Comparative Example is bending strength in a case in which the carbon fibers are wavy. The bending strength in the vertical direction is slightly less than the target, and the bending strength in the lateral direction is less than 50% of the target. The Example is bending strength of the resin molded body 30 relating to the present embodiment. Regardless of the direction of the bending, the Example achieves approximately 107% of the target. From Fig. 9 and Fig. 10, it can be understood that the present embodiment is effective because the strength of the resin molded body is ensured.

### [Other Embodiments]

Although an example of an embodiment of the present invention has been described above, embodiments of the present invention are not limited to those described above, and, other than the above, the present invention can, of course be implemented by being modified in various ways within a scope that does not depart from the gist thereof.

The convex and concave shapes for molding at the upper die 11 and the lower die 12 are not limited to those that are illustrated, and can be changed appropriately in accordance with the shape of the resin molded body 30 that is to be molded.

Although the surface convex portion 18 are provided over the entire surface of the cavity surface 16, for example, the surface convex portions 18 may be provided only at regions where it is difficult for the thermoplastic resin and the fibers to flow. Further, the direction in which the surface convex portions 18 extend is not limited to being parallel to the arrow A direction. Provided that the thermoplastic resin and fibers flow smoothly, the extending direction may be inclined or may meander with respect to the arrow A direction. Moreover, although the surface convex portions 18 extend continuously, the surface convex portions 18 may be provided intermittently. In this case, it is desirable that the length of one of the surface convex portions 18 be around 5 to 25 mm. This can be changed appropriately in consideration of the length of the fibers. The surface convex portions 18 may be distributed in the form of spots at the cavity surface 16.

The disclosure of Japanese Patent Application No. 2014-119800 filed on June 10, 2014 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

## Claims

1. A method of manufacturing a resin molded body (30), the method comprising:
a first step (51) of heating a fiber reinforced resin material (20) in which a thermoplastic resin is used as a fiber binder resin, and placing the fiber reinforced resin material (20) between a first die (11) and a second die (12) that respectively have cavity surfaces (16) at which a plurality of surface convex portions (18) are provided; and
a second step (52) of superposing the first die (11) and the second die (12) on each other in a molding direction, and press molding the fiber reinforced resin material (20) at the cavity surfaces (16).

2. The method of manufacturing a resin molded body (30) of claim 1, wherein a plurality of surface convex portions (26) are provided at surfaces of the fiber reinforced resin material (20).

3. The method of manufacturing a resin molded body (30) of claim 1 or claim 2, wherein the surface convex portions (18, 26) are formed along a direction of flow of the thermoplastic resin and the fibers at a time of press molding.

4. The method of manufacturing a resin molded body (30) of any one of claim 1 through claim 3, wherein a height (H) of the surface convex portions (18) is 0.05 to 1 mm.

5. A press die (10) for resin molding, wherein a plurality of surface convex portions (18) are provided at cavity surfaces (16).

6. The press die (10) for resin molding of claim 5, wherein the surface convex portions (18) are formed along a direction of flow of a thermoplastic resin and fibers at a time of heating and press molding a fiber reinforced resin material in which the thermoplastic resin is used as a fiber binder resin.

7. The press die (10) for resin molding of claim 5 or claim 6, wherein a height (H) of the surface convex portions (18) is 0.05 to 1 mm.
